(19) Europäisches Patentamt / European Patent Office / Office européen des brevets

(11) **EP 2 654 982 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(51) Int Cl.:
***B21C 51/00*** (2006.01)     ***B21B 37/46*** (2006.01)
***G01V 3/12*** (2006.01)

(21) Anmeldenummer: **11785391.1**

(22) Anmeldetag: **16.11.2011**

(86) Internationale Anmeldenummer:
**PCT/EP2011/070191**

(87) Internationale Veröffentlichungsnummer:
**WO 2012/084344 (28.06.2012 Gazette 2012/26)**

(54) **VERFAHREN UND VORRICHTUNG ZUR MESSUNG DER GESCHWINDIGKEIT EINES WALZGUTES**

METHOD AND DEVICE FOR MEASURING THE SPEED OF A ROLLING STOCK

PROCÉDÉ ET DISPOSITIF POUR LA MESURE DE LA VITESSE D'UN PRODUIT LAMINÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2010 EP 10196184**

(43) Veröffentlichungstag der Anmeldung:
**30.10.2013 Patentblatt 2013/44**

(73) Patentinhaber: **Siemens VAI Metals Technologies GmbH**
**4031 Linz (AT)**

(72) Erfinder:
• **KEINTZEL, Georg**
**A-4221 Steyregg (AT)**
• **WINTER, Günther**
**91077 Neunkirchen/Brand (DE)**

(74) Vertreter: **Maier, Daniel Oliver**
**Siemens AG**
**Postfach 22 16 34**
**80506 München (DE)**

(56) Entgegenhaltungen:
EP-A2- 0 068 431     GB-A- 1 207 241
GB-A- 1 496 138     JP-A- 1 113 102

• RICCIATTI R L ET AL: "LASER VELOCIMETRY", AISE STEEL TECHNOLOGY, AISE, PITTSBURG, PA, US, Bd. 73, Nr. 6, 1. Juni 1996 (1996-06-01), Seiten 38-41, XP000621624, ISSN: 0021-1559

EP 2 654 982 B1

**Beschreibung**

Technisches Gebiet

Die Erfindung betrifft ein Verfahren und eine Vorrichtung zur Messung der Geschwindigkeit eines Walzgutes, insbesondere der Bandgeschwindigkeit eines Metallbandes, wobei mittels einer Sendeeinrichtung eine auf die Oberfläche des Metallbandes gerichtete, im Mikrowellenbereich liegende elektromagnetische Strahlung gesendet und mittels einer Empfangseinrichtung eine von dort reflektierte elektromagnetische Strahlung empfangen wird. Die Erfindung betrifft auch ein Verfahren zum Ansteuern einer Walzanlage sowie das Nachrüsten einer Walzanlage.

Stand der Technik

Um die einzelnen Walzgerüste eines Walzwerkes entsprechend steuern oder regeln zu können, ist eine zuverlässige Erfassung der Geschwindigkeit des Walzgutes erforderlich.

Zum Erfassen der Geschwindigkeit eines Metallbandes kann man beispielsweise die Drehbewegung der Arbeitswalzen eines Walzgerüstes oder auch andere mit dem Walzgut in Kontakt stehende Walzen heranziehen. Dabei tritt aber das Problem auf, dass das Messsignal korrigiert werden muss, da in der Praxis zwischen Arbeitswalzen bzw. Rollen und Walzgut ein Schlupf auftreten kann.

Zur Messung der Bandgeschwindigkeit sind auch berührungslose Bewegungs-Messfühler bekannt, wie beispielsweise aus der EP 1 252 942 A1. Dabei wird ein Laserstrahl, auf die Bahnoberfläche gesendet und aus der Doppler-Verschiebung des reflektierten Signals die Bandgeschwindigkeit ermittelt. Bei einem aus JP 1 113102 A, welche den nächstkommenden Stand der Technik bildet, bekannten Verfahren wird ebenfalls eine Laser-Doppler-Vorrichtung vorgeschlagen. Ein solches optisches Messsystem ist aber störanfällig. Da für die Kühlung von Arbeitswalzen flüssige Kühlmittel verwendet werden, kommt es durch Kontakt mit der hohen Temperatur eines Warmbandes zur Bildung von Dampf. Die Ausbreitung des Lichtstrahls ist damit beeinträchtigt und es kommt zu Ungenauigkeiten bei der Geschwindigkeitsmessung. Aufgrund der rauen Umgebungsbedingungen eines Walzgerüstes kann es auch vorkommen, dass ein optisches Messsystem gänzlich ausfällt.

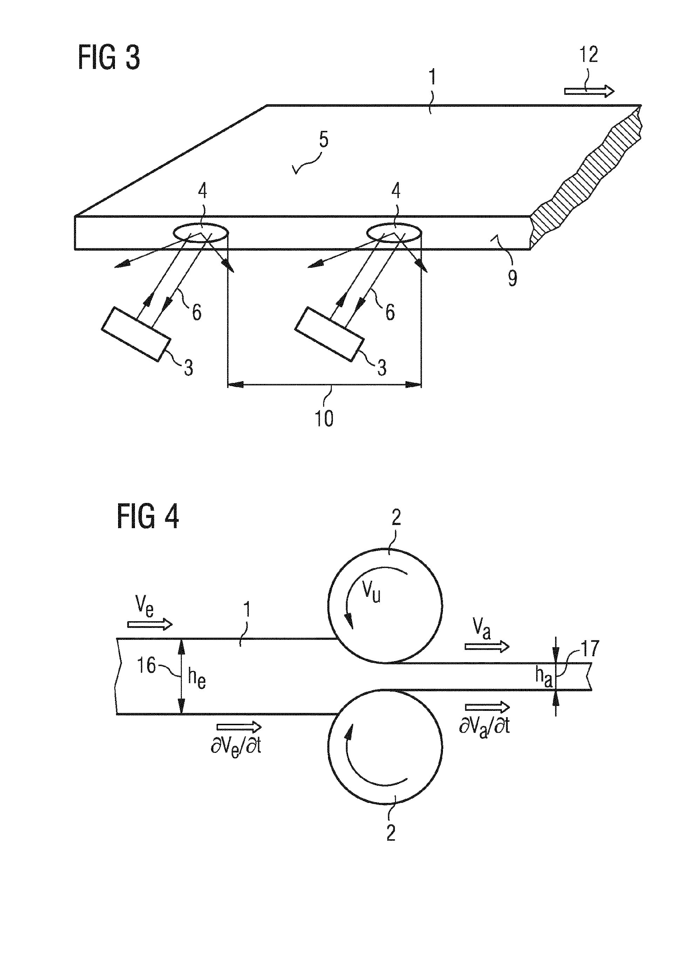

Eine genaue und zuverlässige Bestimmung der Bandgeschwindigkeit hat aber auch noch weitere Vorteile, u. A. kann auf indirektem Wege aus der Bandgeschwindigkeit die Dicke des Metallbandes ermittelt werden, wie unter Figur 4 näher erläutert ist.

Darstellung der Erfindung

Es ist eine Aufgabe der vorliegenden Erfindung ein Verfahren und eine Vorrichtung anzugeben, so dass die Ermittlung der Geschwindigkeit eines Walzgutes, insbesondere der Bandgeschwindigkeit eines Metallbandes mit besserer Genauigkeit und mit hoher Zuverlässigkeit möglich ist.

Diese Aufgabe wird für ein Verfahren zum Bestimmen der Geschwindigkeit eines Walzgutes mit den Merkmalen des Anspruchs 1, für eine Vorrichtung mit den Merkmalen des Anspruchs 5, für ein Verfahren zum Ansteuern bzw. Nachrüsten einer Walzanlage mit Merkmalen des Anspruchs 16 bzw. 17 gelöst. Vorteilhafte Ausgestaltungen der Erfindung sind in den jeweils abhängigen Ansprüchen definiert.

Einem Grundgedanken der Erfindung zufolge wird mit zumindest einer Sende- und Empfangseinrichtung auf das Walzgut eine elektromagnetische Strahlung gesendet und aus dem zurückgeworfenen empfangenen Reflexionssignal in einer Auswerteeinrichtung die Bandgeschwindigkeit ermittelt.

Bevorzugt ist eine Ausführungsform mit zumindest zwei Sende- und Empfangseinrichtungen, die in Bewegungsrichtung des Walzgutes in einem Abstand hintereinander angeordnet sind und auf jeweils einen Bereich der Oberfläche (Reflektorfläche) des Walzgutes eine hochfrequente elektromagnetische Strahlung senden. Die Frequenz dieser elektromagnetischen Strahlung kann dabei bevorzugt im Bereich von 300 MHz bis 300 GHz, insbesondere im Bereich von Radarwellen liegen. Aufgrund der Rauheit oder Textur der Walzband-Oberfläche wird diese HF-Strahlung gestreut und teilweise zurück in Richtung des Senders reflektiert. Aus dieser reflektierten Strahlung wird jeweils ein Reflexionssignal gewonnen und einer Auswerteeinrichtung zugeführt. Die Auswerteeinrichtung ermittelt unter Verwendung einer Korrelationsfunktion, d.h. aus der Beziehung zwischen zwei oder mehreren Reflexionssignalen die Bandgeschwindigkeit. Als Korrelationsfunktion kann zum Beispiel die Kreuzkorrelation verwendet werden. Die Auswertung der Reflexionssignale kann durch eine digitale Signalverarbeitung erfolgen, indem die Auswerteeinrichtung als Recheneinrichtung ausgebildet ist. In dieser Recheneinrichtung werden die zumindest zwei Reflexionssignale digitalisiert und anschließend von einem entsprechenden Korrelations-Algorithmus ausgewertet. Durch die im Vergleich zu Licht langwelligere Radarstrahlung ist eine Ermittlung der Bandgeschwindigkeit mit einer besseren Genauigkeit möglich, denn Dampf und andere Verunreinigungen im Ausbreitungsweg der elektromagnetischen Strahlung haben im Vergleich zu einer Lichtstrahlung einen vergleichsweise geringeren Einfluss. Ein Radar-Messsystem ist im Vergleich zu einem optischen Messsystem robuster. Der benötigte Einbauraum ist vergleichsweise gering. Durch die bessere Genauigkeit und Verfügbarkeit der erfindungsgemäßen Geschwindigkeitsmessung kann das Automatisierungssystem einer Walzstraße vereinfacht werden und gleichzeitig die Produktgenauigkeit erhöht werden. Dies kommt zum Beispiel der Dickenregelung in Walzstraßen in einer Tandemanordnung insbesondere zugute, wie zum Beispiel in Kalttandemstraßen oder Warmbreitbandstraßen. Dickenfehler, wie sie bislang am Bandkopf auftraten, können verringert werden. In der Auswerteeinrichtung kann unter Verwendung der Bandgeschwindigkeit mit guter Genauigkeit auch die Banddicke ermittelt werden.

Es kann von Vorteil sein, wenn nicht die Breitseite sonder die Schmalseite des Walzgutes als Reflektorfläche verwendet wird. Dadurch ist der störende Einfluss von Dampf und Verunreinigung im Strahlengang geringer. Die Messeinrichtung kann seitlich zum Walzgut angeordnet werden, wo in der Regel mehr Platz zur Verfügung steht. Darüber hinaus ergibt sich der Vorteil, dass eine Integration in einen Schlingenheber oder in eine Seitenführung einer Walzstraße möglich ist.

Besonders einfach kann es dabei sein, wenn bei der Korrelation der Reflexionssignale jeweils der zeitliche Amplitudenverlauf der reflektierten Strahlung verwendet wird.

Es hat sich als vorteilhaft herausgestellt, wenn die Reflektorfläche auf dem Walzgut klein gehalten werden kann. Bei einem vorgegebenen Abstand zwischen Antenne und Band lässt sich dadurch der Bereich der Ausleuchtung auf dem Metallband sehr klein halten, was vorteilhaft für die Korrelation der Reflexionssignale ist.

Es kann besonders vorteilhaft sein, wenn die elektromagnetische Strahlung mit einem metallischen Hohlleiter abgestrahlt wird, dessen Apertur auf die Oberfläche des Walzgutes gerichtet ist. Vorteilhaft ist ein Aperturstrahler welcher eine keulenförmige Richtcharakteristik aufweist.

Dabei kann es bei einem Einbau zwischen Walzgerüsten günstig sein, wenn der Hohlleiter aus geraden und/oder gekrümmten Abschnitten zusammengesetzt ist, so dass die Einrichtungen zur Erzeugung und Abstrahlung der elektromagnetischen Wellen örtlich voneinander entfernt sind. Durch eine entsprechende Ausbildung eines Hornstrahlers kann die Ausleuchtung sehr gezielt an einen gewünschten Bereich der Bandoberfläche gerichtet werden, ohne dass sich der z.B. thermisch empfindliche Sender/Empfänger in einem gefährdeten Bereich befindet, z.B. nahe der Oberfläche eines Warmbandes, welches üblicherweise eine Temperatur von 800 bis 1000°C aufweist. Durch die gekrümmte Ausbildung des Hohlleiters ist es ferner möglich, die Geschwindigkeitsmessung in andere mechanische Anlagenteile, wie zum Beispiel in einen Schlingenheber einer Warmbreitbandstraße, zu integrieren.

Eine bevorzugte Ausführungsform kann dadurch gekennzeichnet sein, dass der Aperturstrahler in den Abstreifer einer Arbeitswalze eines Walzgerüstes oder in den Überleittisch nahe am Walzspalt integriert ist. Dadurch wird die Bandgeschwindigkeit in unmittelbarer Nähe des Walzspaltes eines Walzgerüstes gemessen und es ist es möglich, die Totzeit einer Dickenregelung erheblich zu verkürzen.


Kurzbeschreibung der Zeichnungen

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung, anhand eines nicht einschränkenden Ausführungsbeispiels zu entnehmen sind.

Es zeigen:

Figur 1     eine räumliche Skizze eines Ausführungsbeispiels der Erfindung mit zwei in Reihe hintereinander angeordneten Sende- und Empfangseinrichtungen, welche jeweils eine elektromagnetische Strahlung auf eine Breitefläche eines Metallbandes senden und das Reflexionssignal empfangen;

Figur 2     einen zeitlichen Verlauf der beiden Reflexionssignale der Figur 1;

Figur 3     eine räumliche Skizze eines anderen Ausführungsbeispiels der Erfindung mit zwei in Reihe hintereinander angeordneten Sende- und Empfangseinrichtungen, welche seitlich zum Walzband angeordnet sind;

Figur 4     eine schematische Skizze in welcher ein Walzband in Eingriff mit zwei Arbeitswalzen dargestellt ist;

Figur 5     eine schematische Darstellung eines Walzgerüstes von der Seite her gesehen;

Figur 6     ein vereinfachtes Blockschaltbild zur Ansteuerung einer Walzanlage.


Ausführung der Erfindung

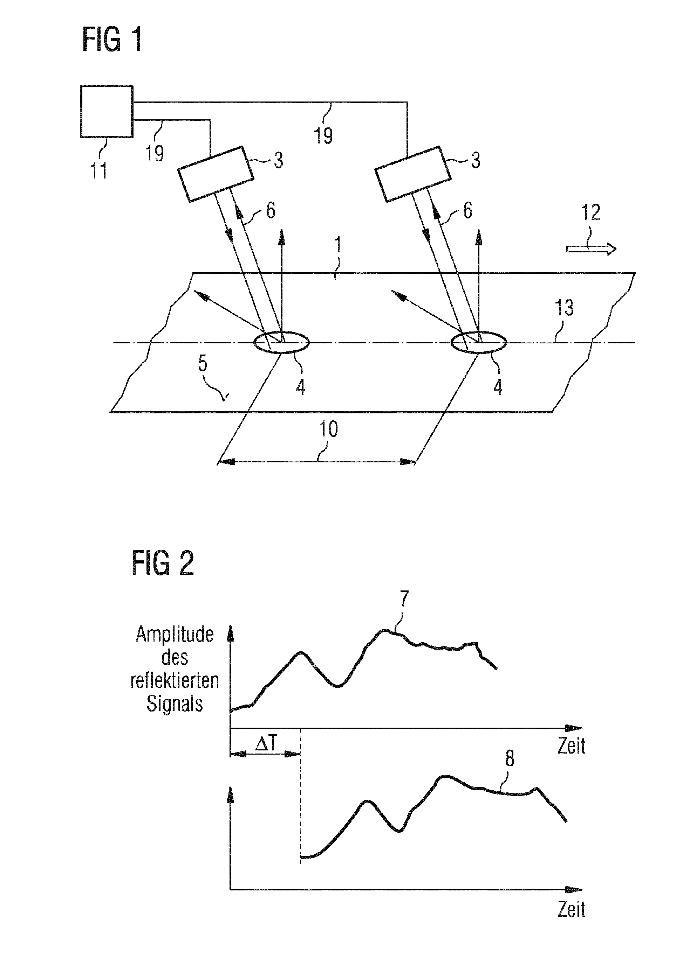

Die Figur 1 zeigt ein erstes Ausführungsbeispiel der Erfindung. Zu sehen sind zwei in einem Abstand zueinander angeordnete Sende- und Empfangseinrichtungen 3. Jede dieser Sende- und Empfangseinrichtungen 3 erzeugt dabei kontinuierlich eine gebündelte Mikrowellenstrahlung. Diese Hochfrequenz-Strahlung (Radarwellen) wird einem in Figur 1 nicht näher dargestellten Aperturstrahler zugeführt, dessen freie Öffnung zum Metallband 1 zeigt. Der Aperturstrahler sendet elektromagnetische Wellen 6 in einem bestimmten Raumwinkel auf eine Breitfläche 5 des Metallbandes 1. Auf der Bandoberfläche 5 wird die Mikrowellenstrahlung diffus gestreut. Je nach Rückspiegelverhalten wird ein Anteil dieser elektromagnetischen Strahlung 6 von der jeweiligen Reflektorfläche 4 zurück zur Sende- und Empfangseinrichtung 3 reflektiert. Die zurückgeworfene Mikrowellenstrahlung wird mit einer nicht näher dargestellten Empfangsantenne empfangen. Aus dem zurückgeworfenen Anteil wird in jeder der beiden Sende- und Empfangseinrichtungen 3 ein Reflexionssignal erzeugt. Die beiden Reflexionssignale werden über Signalleitungen 19 einer Auswerteeinrichtung 11 zugeführt. In der Auswerteeinrichtung 11 erfolgt eine Signalanalyse. Die Auswerteeinrichtung 11 ermittelt aus den zugeführten Reflexionssignalen durch Kreuzkorrelation der Amplitudenverläufe 7, 8 (Figur 2) die Geschwindigkeit des Metallbandes 1. Da elektromagnetische Wellen im Mikrowellen-Radarbereich relativ unempfindlich bezüglich Dampf und sonstigen Störeinflüssen sind, kann die Bandgeschwindigkeit mit einer sehr guten Genauigkeit ermittelt werden. Insbesondere bei Warmbreitbandstraßen ist dies von besonderem Vorteil. Das Messsystem ist robust und weitgehend störunanfällig.

Wie in der Skizze der Figur 1 dargestellt, erfolgt das Senden und Empfangen der Mikrowellenstrahlung in einem bestimmten Raumwinkel bezüglich der durch die Breitfläche 5 des Metallbandes 1 vorgegebenen Ebene. Die Reflektorflächen 4 liegen in einem Abstand 10 zueinander und jeweils auf einer Linie 13, die parallel zur Bewegungsrichtung 12 des Metallbandes 1 verläuft. Dadurch wird erreicht, dass die Reflexionsamplituden im Zeitverlauf sehr ähnlich sind und die Bandgeschwindigkeit mit guter Genauigkeit bestimmt werden kann.

Figur 2 zeigt den durch die Beschaffenheit der Oberfläche des Walzbandes längs der Linie 13 determinierten Amplitudeverlauf (Rückstreuamplituden) der beiden Reflexionssignale 7 und 8 als Funktion der Zeit. Wie gesagt, liegen die Reflektorflächen 4 in einer zur Bewegungsrichtung 12 des Metallbandes 1 parallelen Linie 13 und in einem Abstand 10 hintereinander, so dass das selbe Flächenstück zeitlich versetzt unter den beiden Sende- und Empfangseinrichtungen 3 hindurch läuft. Folge davon ist, dass die beiden Reflexionssignale 7, 8 in ihrem Zeitverlauf sehr ähnlich sind. Wie aus der Skizze der Figur 2 zu entnehmen ist, sind die beiden Signale 7, 8 zueinander um $\Delta T$ zeitlich verschoben. Die Korrelation der beiden Reflexionssignale 7 und 8 wird maximal, wenn die zeitliche Verschiebung dem Quotienten aus dem Abstand der beiden Sende- und Empfangseinrichtungen 3 und der aktuellen Bandgeschwindigkeit erreicht, mit anderen Worten, wenn ein mit dem ersten Empfänger 3 gemessener Reflexionsbereich 4 vom örtlich beabstandeten zweiten Empfänger 3 gemessen wird. Da der Abstand 10 zwischen den beiden Reflektorflächen 4 bekannt ist, kann durch diese Messeanordnung die Bandgeschwindigkeit mit guter Genauigkeit berechnet werden.

Figur 3 zeigt ein anderes Ausführungsbeispiel der Erfindung, bei der nicht die Breitfläche 5 des Walzbandes 1, sondern eine Seitenfläche 9 als Reflexionsbereich 4 für die elektromagnetische Strahlung 6 benutzt wird. Auch hier sind die von den beiden Sende- und Empfangseinrichtungen 3 mit elektromagnetischer Strahlung beleuchteten Reflektorflächen 4 in Bewegungsrichtung 12 des Metallbandes 1 hintereinander in einem Abstand 10 angeordnet. Ebenso liegen die beiden Reflektorflächen 4 auf einer Linie 13, die wieder parallel zur Bewegungsrichtung 12 des Walzbandes 1 verläuft.

Die Figur 4 zeigt ein Walzband 1, welches durch den Druck von zwei Arbeitswalzen 2 von einer Einlaufdicke 16 auf eine Auslaufdicke 17 reduziert wird. Vorgegeben durch die Kontinuität des Massenflusses ergibt sich durch die Dickenreduktion, dass die in den Walzspalt einlaufende Bandgeschwindigkeit $v_e$, die Walzen-Umfangsgeschwindigkeit $v_u$ und die austretende Bandgeschwindigkeit $v_a$ sich unterscheiden. Die genaue Kenntnis der Bandgeschwindigkeit ist von großer Bedeutung für die Regelung einer meist mehrgerüstigen Walzanlage. Außerdem kann in Kenntnis einer der Banddicken (Einlaufdicke $h_e$ oder Auslaufdicke $h_a$) und der in einem Walzgerüst einlaufenden Geschwindigkeit $v_e$ und auslaufenden Geschwindigkeit $v_a$ die andere Banddicke ermittelt werden (Annahme einlaufend Bandbreite $b_e$ = auslaufende Bandbreite $b_a$). Es gilt die Beziehung:

$$\partial v_e \ / \ \partial t \ = \ \partial v_a \ / \ \partial t$$

$$h_e \ * \ b_e \ * \ v_e = h_a \ * \ b_a \ * \ v_a$$

Es versteht sich, dass anstelle von zwei auch eine Mehrzahl derartiger Sende- und Empfangseinrichtungen 3 in Bewegungsrichtung 12 des Bandes hintereinander angeordnet sein können. Durch die Signalanalyse einer Mehrzahl von Rückstreuamplituden ist es möglich, dass u. A. störende Einflussgrößen der Bandbewegung die quer zur Bewegungsrichtung (Walzrichtung) liegen, kompensiert werden können. Die Radar-Sendeeinrichtung und die Radar-Empfangseinrichtung können in zwei örtlich getrennten Geräten realisiert sein oder in einem einzigen Gerät integriert sein. Dies gilt analog auch für die Auswerteeinrichtung 11 und die Sende- und Empfangseinrichtung 3.

Der Abstand zwischen den Sende- und Empfangseinrichtungen 3 und einem Warmband ist in den Beispielen der Figur 1 bzw. Figur 3 einerseits genügend groß gewählt, so dass eine mechanische oder thermische Beschädigung der Messeinrichtung ausgeschlossen ist. Andererseits ist der Abstand so gewählt, dass die von der Antenne abgestrahlte elektromagnetische Strahlung eine möglichst kleine Fläche auf der Oberfläche des Metallbandes beleuchtet. Dadurch lässt sich die Korrelation zwischen den beiden Messpositionen besser auswerten.

Eine Konzentration der elektromagnetischen Strahlung auf eine besonders kleine Beleuchtungs-Fläche auf der Bandoberfläche lässt sich durch Mikrowellen-Antennen erreichen, welche eine stark gebündelte Richtcharakteristik aufweisen. Eine besonders gute Bündelung der elektromagnetischen Strahlung kann insbesondere durch Aperturstrahler, wie Horn- oder Trichterstrahler mit keulenförmiger Richtcharakteristik erreicht werden.

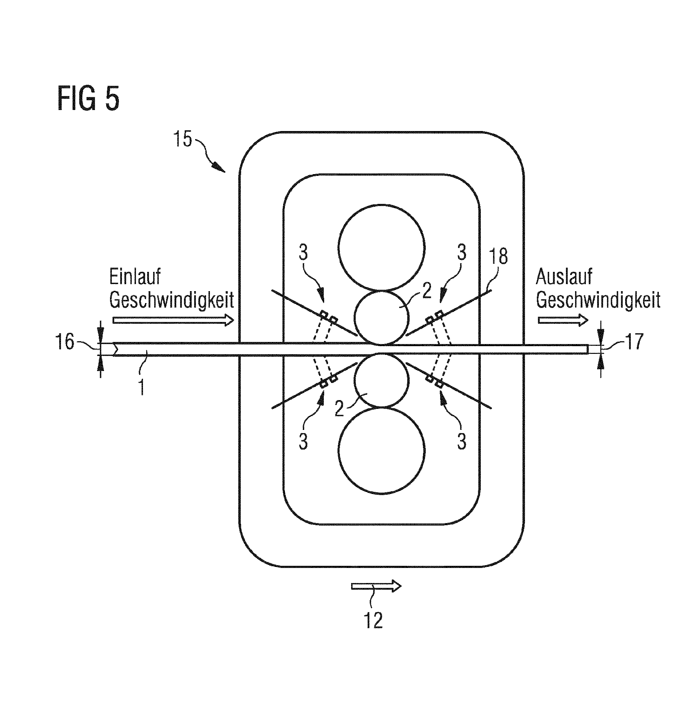

Figur 5 zeigt in einer stark vereinfachten Darstellung ein Walzgerüst 15 von der Seite gesehen. Das Walzgut 1 wird von der Einlaufdicke 16 im Spalt der Arbeitswalzen 2 auf die Auslaufdicke 17 reduziert. Die Sende- und Empfangsantenne der Radareinheit 3 sind in den Abstreifer 18 eingebaut. Dieser Einbau im Walzgerüst beziehungsweise Walzenständer 15 hat den Vorteil einer kürzeren Distanz zum Walzspalt, das heißt der Regelkreis der Dickenregelung hat keinerlei Totzeit. Im gezeigten Ausführungsbeispiel ist sowohl einlaufseitig als auch auslaufseitig jeweils an der Oberseite und an der Unterseite des Walzbandes 1 eine solche Sende- und Empfangseinrichtung 3 angeordnet. Diese Radar-Messgeräte 3 können sowohl in der Mitte der Walzlinie als auch außermittig angebracht sein. Es kann auch vorteilhaft sein, dass sowohl einlaufseitig als auch auslaufseitig aus Redundanzgründen mehrere dieser Radar-Messgeräte 3 in einem Walzenständer 15 eingebaut sind.

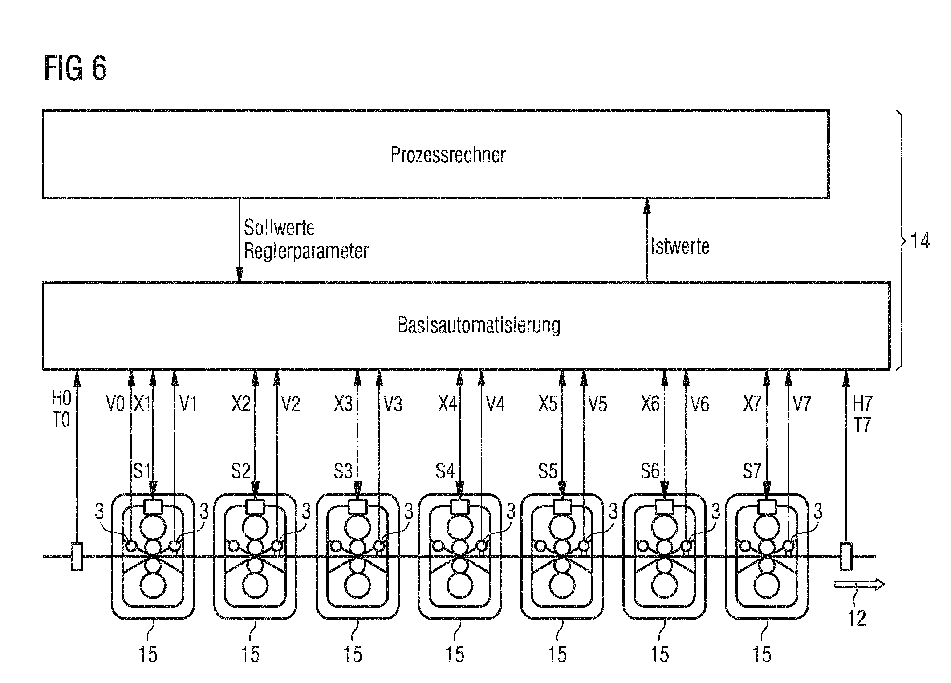

Figur 6 zeigt ein vereinfachtes Blockschaltbild der Automatisierung einer Walzanlage. Die einzelnen Walzgerüste 15 sind dabei über Signalleitungen mit einem Leitsystem 14 verbunden. Dieses Leitsystem 14 besteht im dargestellten Beispiel aus einem Prozessrechner und einer Basisautomatisierung (Level 1- / Level -Automatisierung.

Der Prozessrechner gibt dabei der Basisautomatisierung Sollwerte und Parameter für die Regelung beziehungsweise Steuerung vor. Die Basisautomatisierung versorgt den Prozessrechner mit Istwerten aus dem Prozess. An jedem Walzenständer 15 sind Sende- und Empfangseinrichtungen 3 installiert welche der übergeordneten Basisautomatisierung Radar-Messwerte der Bandgeschwindigkeit V0 bis V7 liefern. Diese Radar-Bandgeschwindigkeitsmesswerte V0 bis V7 werden bei der Dickenregelung verwendet. Durch diese Radar-Bandgeschwindigkeits-Messung kann auf die Auswertung der sonst üblichen Drehzahlsensoren an den Hauptantrieben der Walzgerüste verzichtet werden. In Figur 6 ist die Übertragung weiterer Messwerte / Sollwerte zwischen Walzgerüsten 15 und übergeordnetem Leitsystem 14 eingezeichnet: Ho, H7 Banddicke; T0, T7 Temperatur; X1, X7 Walzkräfte, Biegekräfte; Anstellungspositionen, Looperposition etc. sowie S1 - S7 Anstellposition, Biegekräfte, Drehzahl etc.

Eine andere Ausführung der Erfindung kann in einem Verfahren zum Ansteuern einer Walzanlage zum Herstellen eines Walzbandes liegen, wobei das Walzband in einer Bewegungsrichtung durch den Walzspalt eines Arbeitswalzenpaares hindurchgeführt wird. Dabei erfährt das Walzband eine Dickenreduktion von einer Einlaufdicke 16 auf eine Auslaufdicke 17. Zum Zwecke einer Dickenregelung wird einem Leitsystem 14 einer oder mehrere Istwerte der Einlaufdicke 16 und/oder der Auslaufdicke 17 zugeführt. Bei der Erfassung der Einlaufdicke 16 und/oder der Auslaufdicke 17 wird ein Verfahren nach einem der Ansprüche 1 bis 4 oder eine Vorrichtung nach einem der Ansprüche 5 bis 15 zum Einsatz gebracht.

Eine weitere Ausführung der Erfindung kann im Nachrüsten einer bestehenden Walzanlage zum Herstellen eines Walzbandes liegen. Dabei wird ebenfalls ein Verfahren nach einem der Ansprüche 1 bis 4 oder eine Vorrichtung nach einem der Ansprüche 5 bis 15 zum Einsatz gebracht.

Zusammenstellung der verwendeten Bezugszeichen

| 1 | Walzband |
|---|---|
| 2 | Arbeitswalze |
| 3 | Sende- und Empfangseinrichtung |
| 4 | Reflektorfläche |
| 5 | Breitfläche des Walzbandes |
| 6 | elektromagnetische Strahlung |
| 7 | Rückstreuamplitude der ersten Sende- und Empfangseinrichtung |
| 8 | Rückstreuamplitude der zweiten Sende- und Empfangseinrichtung |
| 9 | Seitenfläche des Walzbandes |
| 10 | Abstand zwischen den Reflektorflächen |
| 11 | Auswerteeinrichtung |
| 12 | Bewegungsrichtung des Walzbandes |
| 13 | Linie |
| 14 | Leitsystem |

15    Walzgerüst
16    Einlaufdicke
17    Auslaufdicke
18    Abstreifer
19    Signalleitung

**Patentansprüche**

1. Verfahren zur Bestimmung der Geschwindigkeit eines Walzgutes, insbesondere der Bandgeschwindigkeit eines Walzbandes (1), wobei zumindest zwei Sende- und Empfangseinrichtungen (3) verwendet werden, mittels derer jeweils auf eine Reflektorfläche (4) des Walzgutes (1) gerichtete elektromagnetische Strahlung (6) im Mikrowellenbereich erzeugt und auf das Walzgut gesendet wird, wobei die Reflektorflächen (4) auf einer parallel zur Bewegungsrichtung (12) verlaufenden Linie (13) in einem Abstand (10) zueinander liegen, und aus dem von der jeweiligen Reflektorfläche (4) zurückgeworfenen und empfangenen Anteil jeweils ein Reflexionssignal gebildet wird, wobei jedes dieser Reflexionssignale einer Auswerteeinrichtung (11) zugeführt wird, mittels derer unter Verwendung einer Korrelationsmethode die Bandgeschwindigkeit ermittelt wird.

2. Verfahren nach Anspruch 1, **dadurch gekennzeichnet, dass** die Reflektorflächen (4) jeweils durch einen Flächenbereich der Schmalseite (9) des Walzgutes (1) gebildet werden.

3. Verfahren nach Anspruch 1 oder 2, **dadurch gekennzeichnet, dass** das Reflexionssignal durch den Zeitverlauf der Rückstreuamplituden (7, 8) der zuvor gesendeten elektromagnetischen Strahlung (6) gebildet wird.

4. Verfahren nach einem der Ansprüche 1 bis 3, **dadurch gekennzeichnet, dass** die elektromagnetische Strahlung (6) in einem Frequenzbereich von 300 MHz bis 300 GHz erzeugt wird und mittels einer Antenne mit einer auf das Walzgut (1) gerichteten Richtwirkung gesendet wird.

5. Vorrichtung zur Bestimmung der Geschwindigkeit eines Walzgutes, insbesondere der Bandgeschwindigkeit eines Walzbandes (1), umfassend:

     zumindest zwei Sende- und Empfangseinrichtungen (3), die dazu eingerichtet sind, auf jeweils eine zugeordnete, durch einen Teil der Oberfläche des Walzgutes gebildete Reflektorfläche (4) eine elektromagnetische Strahlung (6) im Mikrowellenbereich zu senden, wobei die Reflektorflächen (4) auf einer parallel zur Bewegungsrichtung (12) des Walzgutes (1) verlaufenden Linie (13) in einem Abstand (10) zueinander liegen, und um aus dem von der jeweiligen Reflektorfläche (4) zurückgeworfenen Anteil der elektromagnetischen Strahlung jeweils ein Reflexionssignal zu bilden, wobei jedes dieser Reflexionssignale über eine Signalleitung einer Auswerteeinrichtung (11) zugeführt ist, welche dazu eingerichtet ist, unter Verwendung einer Korrelationsmethode die Bandgeschwindigkeit zu ermitteln.

6. Vorrichtung nach Anspruch 5, **dadurch gekennzeichnet, dass** die Vorrichtung derart ausgebildet ist, dass die gesendete elektromagnetische Strahlung (6) auf eine Seitenfläche (9) des Walzbandes (1) gerichtet ist.

7. Vorrichtung nach Anspruch 5 oder 6, **dadurch gekennzeichnet, dass** jedes Reflexionssignal durch den zeitlichen Verlauf der Rückstreuamplituden (7, 8) der zuvor gesendeten elektromagnetischen Strahlung (6) gebildet ist.

8. Vorrichtung nach Anspruch 5, **dadurch gekennzeichnet, dass** die Sende- und Empfangseinrichtung (3) eine Sende- und / oder Empfangsantenne aufweist, welche als Aperturstrahler ausgebildet ist, der eine keulenförmige Richtcharakteristik aufweist.

9. Vorrichtung nach Anspruch 8, **dadurch gekennzeichnet, dass** der Aperturstrahler ein Horn- oder Trichterstrahler ist.

10. Vorrichtung nach Anspruch 8, **dadurch gekennzeichnet, dass** der Aperturstrahler in den Abstreifer einer Arbeitswalze eines Walzgerüstes (15) integriert ist.

11. Vorrichtung nach einem der Ansprüche 5 bis 10, **dadurch gekennzeichnet, dass** die auf das Walzgut (1) gerichtete elektromagnetische Strahlung (6) eine Frequenz im Bereich von 300 MHz bis 300 GHz aufweist.

**12.** Vorrichtung nach Anspruch 8, **dadurch gekennzeichnet, dass** der Aperturstrahler in die Seitenführung eines Walzgerüstes (15) integriert ist.

**13.** Vorrichtung nach Anspruch 8, **dadurch gekennzeichnet, dass** der Aperturstrahler von unten in einen Überleittisch nahe dem Walzspalt eines Walzgerüstes (15) integriert ist.

**14.** Vorrichtung nach Anspruch 8, **dadurch gekennzeichnet, dass** der Aperturstrahler eines Walzgerüstes (15) in den Schlingenheber einer Walzstraße integriert ist.

**15.** Vorrichtung nach Anspruch 8, **dadurch gekennzeichnet, dass** der Aperturstrahler eines Walzgerüstes an den Schlingenheber einer Walzstraße montiert ist, sodass er seitlich auf das Band misst.

**16.** Verfahren zum Ansteuern einer Walzanlage zum Herstellen eines Walzbandes (1), wobei das Walzband (1) in einer Bewegungsrichtung (12) durch den Walzspalt eines Arbeitswalzenpaares hindurchgeführt wird und dabei die Dicke des Walzbandes von einer Einlaufdicke (16) auf eine Auslaufdicke (17) reduziert wird, wobei zum Zwecke einer Dickenregelung einem Leitsystem (14) ein Istwert der Einlaufdicke (16) und/oder der Auslaufdicke (17) zugeführt wird, **dadurch gekennzeichnet, dass** bei der Erfassung der Einlaufdicke (16) und/oder der Auslaufdicke (17) ein Verfahren nach einem der Ansprüche 1 bis 4 oder eine Vorrichtung nach einem der Ansprüche 5 bis 15 zum Einsatz gebracht wird.

**17.** Nachrüsten einer Walzanlage zum Herstellen eines Walzbandes (1), wobei die Walzanlage mehrere Walzgerüste (15) und ein Leitsystem (14) zum Ansteuern der Walzgerüste (15) aufweist, wobei das Walzband (1) in einer Bewegungsrichtung (12) durch den Walzspalt eines Arbeitswalzenpaares (2) hindurchgeführt wird und dabei die Dicke des Walzbandes von einer Einlaufdicke (16) auf eine auslaufdicke (17) reduziert wird, wobei zum Zwecke der Dickenregelung dem Leitsystem (14) eine gemessener Istwerte der Einlaufdicke (16) und/oder der Auslaufdicke (17) zugeführt wird, **dadurch gekennzeichnet, dass** ein Verfahren nach einem der Ansprüche 1 bis 4 oder eine Vorrichtung nach einem der Ansprüche 5 bis 15 beim Einsatz der Walzanlage zum Einsatz gebracht wird.

**Claims**

**1.** Method for determining the speed of rolling stock, especially the strip speed of a rolling strip (1), wherein at least two transmitting and receiving devices (3) are used, by means of which electromagnetic radiation (6) directed onto a reflector surface (4) of the rolling stock (1) is generated in the microwave range and transmitted to the rolling stock in each case, wherein the reflector surfaces (4) lie at a distance (10) from one another on a line (13) running in parallel to the direction of movement (12), and from the portion thrown back from the respective reflector surface (4) and received, a reflection signal is formed in each case, wherein each of these reflection signals (11) is supplied to an evaluation device, by means of which the strip speed is determined using a correlation method.

**2.** Method according to claim 1, **characterised in that** the reflector surfaces (4) are each formed by a surface area of the narrow side (9) of the rolling stock (1).

**3.** Method according to claim 1 or 2, **characterised in that** the reflection signal is formed by the timing curve of the backscatter amplitudes (7, 8) of the previously transmitted electromagnetic radiation (6).

**4.** Method according to one of claims 1 to 3, **characterised in that** the electromagnetic radiation (6) is generated in a frequency range of 300 MHz to 300 GHz and is transmitted by means of an antenna with a directional effect directed onto the rolling stock (1).

**5.** Device for determining the speed of a rolling stock, in particular the strip speed of a rolling strip (1), comprising:

at least two transmitting and receiving devices (3) which are configured to transmit electromagnetic radiation (6) in the microwave range onto a respective assigned reflector surface (4) formed by a part of the surface of the rolling stock, wherein the reflector surfaces (4) lie at a distance (10) from one another on a line (13) running in parallel to the direction of movement (12), and to form a reflection signal in each case from the portion of the electromagnetic radiation thrown back from the respective reflector surface (4), wherein each of these reflection signals (11) is supplied via a signal line to an evaluation device, which is configured to determine the strip speed using a correlation method.

6. Device according to claim 5, **characterised in that** the device is configured such that the transmitted electromagnetic radiation (6) is directed onto a side surface (9) of the rolling strip (1).

7. Device according to claim 5 or 6, **characterised in that** each reflection signal is formed by the temporal curve of the backscatter amplitudes (7, 8) of the previously transmitted electromagnetic radiation (6).

8. Device according to claim 5, **characterised in that** the transmitting and receiving device (3) has a transmitter and receiver antenna which is embodied as an aperture radiator, which has a club-shaped directional characteristic.

9. Device according to claim 8, **characterised in that** the aperture radiator is a horn or a funnel radiator.

10. Device according to claim 8, **characterised in that** the aperture radiator is integrated into the stripper of a working roller of a roll stand (15).

11. Device according to one of claims 5 to 10, **characterised in that** the electromagnetic radiation (6) directed at the rolling stock (1) has a frequency ranging from 300 MHz to 300 GHz.

12. Device according to claim 8, **characterised in that** the aperture radiator is integrated into the lateral guide of a roll stand (15).

13. Device according to claim 8, **characterised in that** the aperture radiator is integrated from below into a transfer table close to the rolling gap of a roll stand (15).

14. Device according to claim 8, **characterised in that** the aperture radiator of a rolling stand (15) is integrated into the loop lifter of a rolling train.

15. Device according to claim 8, **characterised in that** the aperture radiator of a rolling stand is mounted on the loop lifter of a rolling train, so that it measures laterally on the strip.

16. Method for controlling a rolling system for producing a rolling strip (1), wherein the rolling strip (1) is fed in a direction of movement (12) through the rolling gap of a pair of working rollers and when this is done the thickness of the rolling strip is reduced from an entry thickness (16) to an exit thickness (17), wherein, for the purposes of a thickness regulation, an actual value of the entry thickness (16) and/or of the exit thickness (17) is supplied to a control system (14), **characterised in that**, for detecting the entry thickness (16) and/or the exit thickness (17), a method according to one of claims 1 to 4 or a device according to one of claims 5 to 15 is employed.

17. Retrofitting a rolling system for producing a rolling strip (1), wherein the rolling system has a number of roll stands (15) and a control system (14) for controlling the roll stands (15), wherein the rolling strip (1) is guided in a direction of movement (12) through the rolling gap of a pair of working rollers (2) and during this process reduces the thickness of the rolling strip from an entry thickness (16) to an exit thickness (17), wherein, for the purposes of thickness regulation a measured actual value of the entry thickness (16) and/or of the exit thickness (17) is supplied to the control system (14), **characterised in that** a method according to one of claims 1 to 4 or a device according to one of claims 5 to 15 is employed.

**Revendications**

1. Procédé pour déterminer la vitesse d'un produit laminé, en particulier la vitesse de bande d'une bande laminée (1), dans lequel il est fait appel à au moins deux moyens d'émission et de réception (3) à l'aide desquels un rayonnement électromagnétique (6) dans la plage des microondes, dirigé sur une surface de réflecteur (4) du produit laminé (1), est généré et envoyé sur le produit laminé, les surfaces de réflecteur (4) étant disposées sur une ligne (13) parallèle au sens de déplacement (12) à une certaine distance (10) l'une de l'autre, et dans lequel un signal réfléchi est formé à partir de la partie renvoyée par la surface de réflecteur (4) respective et reçue, chacun de ces signaux réfléchis étant amené à un dispositif d'analyse (11) permettant de déterminer la vitesse de bande à l'aide d'une méthode de corrélation.

2. Procédé selon la revendication 1, **caractérisé en ce que** les surfaces de réflecteur (4) sont formées chacune par une zone de surface sur le côté étroit (9) du produit laminé (1).

3. Procédé selon la revendication 1 ou 2, **caractérisé en ce que** le signal réfléchi est formé par la courbe de temps des amplitudes rétrodiffusées (7, 8) du rayonnement électromagnétique (6) émis auparavant.

4. Procédé selon l'une des revendications 1 à 3, **caractérisé en ce que** le rayonnement électromagnétique (6) est généré dans une gamme de fréquences de 300 MHz à 300 GHz et est envoyé au moyen d'une antenne ayant une directivité dirigée sur le produit laminé (1).

5. Dispositif pour déterminer la vitesse d'un produit laminé, en particulier la vitesse de bande d'une bande laminée (1), comprenant :

   au moins deux moyens d'émission et de réception (3), configurés pour envoyer un rayonnement électromagnétique (6) dans la plage des microondes sur une surface de réflecteur (4) associée formée par une partie de la surface du produit laminé, les surfaces de réflecteur (4) étant disposées sur une ligne (13) parallèle au sens de déplacement (12) du produit laminé (1) à une certaine distance (10) l'une de l'autre, et pour former un signal réfléchi à partir de la partie renvoyée par la surface de réflecteur (4) respective du rayonnement électromagnétique, chacun de ces signaux réfléchis étant amené via une ligne de signal à un dispositif d'analyse (11), configuré pour déterminer la vitesse de bande à l'aide d'une méthode de corrélation.

6. Dispositif selon la revendication 5, **caractérisé en ce que** le dispositif est conçu de telle sorte que le rayonnement électromagnétique (6) émis est dirigé sur une surface latérale (9) de la bande laminée (1).

7. Dispositif selon la revendication 5 ou 6, **caractérisé en ce que** chaque signal réfléchi est formé par la courbe de temps des amplitudes rétrodiffusées (7, 8) du rayonnement électromagnétique (6) émis auparavant.

8. Dispositif selon la revendication 5, **caractérisé en ce que** le moyen d'émission et de réception (3) comprend une antenne émettrice et/ou réceptrice, réalisée sous la forme d'une antenne à ouverture rayonnante ayant une directivité en forme de lobe.

9. Dispositif selon la revendication 8, **caractérisé en ce que** l'antenne à ouverture rayonnante est une antenne cornet ou entonnoir.

10. Dispositif selon la revendication 8, **caractérisé en ce que** l'antenne à ouverture rayonnante est intégrée dans le racloir d'un cylindre de travail d'une cage de laminoir (15).

11. Dispositif selon l'une des revendications 5 à 10, **caractérisé en ce que** le rayonnement électromagnétique (6) dirigé sur le produit laminé (1) a une fréquence située dans la plage de 300 MHz à 300 GHz.

12. Dispositif selon la revendication 8, **caractérisé en ce que** l'antenne à ouverture rayonnante est intégrée dans le guidage latéral d'une cage de laminoir (15).

13. Dispositif selon la revendication 8, **caractérisé en ce que** l'antenne à ouverture rayonnante est intégrée par le bas dans une table de transfert près de l'emprise d'une cage de laminoir (15).

14. Dispositif selon la revendication 8, **caractérisé en ce que** l'antenne à ouverture rayonnante d'une cage de laminoir (15) est intégrée dans le releveur de boucle d'un train de laminoir.

15. Dispositif selon la revendication 8, **caractérisé en ce que** l'antenne à ouverture rayonnante d'une cage de laminoir est montée sur le releveur de boucle d'un train de laminoir, de manière à effectuer la mesure latéralement sur la bande.

16. Procédé de commande d'un laminoir pour la fabrication d'une bande laminée (1), dans lequel ladite bande (1) est guidée selon un sens de déplacement (12) à travers l'emprise d'une paire de cylindres de travail et l'épaisseur de la bande est réduite d'une épaisseur d'entrée (16) jusqu'à une épaisseur de sortie (17), sachant qu'en vue d'une régulation de l'épaisseur une valeur réelle de l'épaisseur d'entrée (16) et/ou de l'épaisseur de sortie (17) est envoyée à un système de guidage (14), **caractérisé en ce que** lors de la détection de l'épaisseur d'entrée (16) et/ou de l'épaisseur de sortie (17), un procédé selon l'une des revendications 1 à 4 ou un dispositif selon l'une des revendications 5 à 15 est mis en oeuvre.

17. Mise à niveau d'un laminoir pour la fabrication d'une bande laminée (1), lequel laminoir a plusieurs cages de laminoir (15) et un système de guidage (14) pour commander les cages de laminoir (15), ladite bande laminée (1) est guidée selon un sens de déplacement (12) à travers l'emprise d'une paire de cylindres de travail (2) et l'épaisseur de la bande est réduite d'une épaisseur d'entrée (16) jusqu'à une épaisseur de sortie (17), sachant qu'en vue d'une régulation de l'épaisseur une valeur mesurée réelle de l'épaisseur d'entrée (16) et/ou de l'épaisseur de sortie (17) est envoyée au système de guidage (14), **caractérisé en ce qu'**un procédé selon l'une des revendications 1 à 4 ou un dispositif selon l'une des revendications 5 à 15 est mis en oeuvre lors de l'utilisation du laminoir.

# FIG 1

# FIG 2

## FIG 3

## FIG 4

# FIG 5

# FIG 6

Prozessrechner

Sollwerte
Reglerparameter

Istwerte

14

Basisautomatisierung

H0 T0   V0  X1   V1    X2   V2    X3   V3    X4   V4    X5   V5    X6   V6    X7   V7    H7 T7

S1        S2        S3        S4        S5        S6        S7

3   3   3   3   3   3   3   3   3   3   3   3   3   3

15   15   15   15   15   15   15

12

EP 2 654 982 B1

**IN DER BESCHREIBUNG AUFGEFÜHRTE DOKUMENTE**

**In der Beschreibung aufgeführte Patentdokumente**

- EP 1252942 A1
- JP 1113102 A